# DEMANDE DE BREVET EUROPEEN

(11) **EP 1 457 912 A1**
(43) Date de publication de la demande: **15.09.2004**
(21) Numéro de dépôt: 04290506.7
(22) Date de dépôt: 25.02.2004
(51) Int. Cl.: G06F 17/60, G06F 1/00

(54) **Système de lecture/enregistrement de données par une communication via un réseau, notamment pour la réservation de plages horaires disponibles d'un professionnel de santé**

(30) Priorité: 28.02.2003 FR 0302515
(71) Demandeur: FRANCE TELECOM, 75015 Paris (FR)
(72) Inventeur: Herledan, Frédéric, 38240 Meylan (FR); Le Maire, Claude, 38190 Laval (FR)
(74) Mandataire: Hassine, Albert

(57) **Abrégé**

L'invention concerne un système de lecture/enregistrement de données par communication via un réseau (RC), comportant un serveur distant (SER), une pluralité de postes clients (PC1,PC2) et au moins un poste fournisseur (PF), tous munis de moyens de communication avec le serveur via le réseau. Le serveur comporte une mémoire pour stocker un fichier partagé comprenant des données d'accès sécurisé, ainsi qu'une liste hiérarchisée de droits d'accès, chacun en correspondance d'un identifiant de poste client. Ainsi, le poste fournisseur peut lire et modifier le fichier partagé. Chaque poste client peut lire ce fichier mais ne peut modifier qu'une partie des données qui est fonction du droit d'accès affecté à ce poste client.

## Description

L'invention concerne une lecture et/ou un enregistrement de données par une communication via un réseau, notamment pour la réservation à distance de plages horaires disponibles d'un professionnel de santé.

Les prises de rendez-vous effectuées par les patients d'un professionnel de santé ont généralement lieu par téléphone. Toutefois, il est fréquent que le professionnel de santé soit en consultation au moment où un patient appelle pour une prise de rendez-vous. A cet effet, les professionnels de santé ont recours à des sociétés de télé-secrétariat qui assurent la prise d'un rendez-vous dans une plage horaire disponible d'un agenda du professionnel de santé et rendent compte au professionnel de santé de la date et de l'horaire de la plage réservée.

Toutefois, un tel service de télé-secrétariat est encore onéreux pour la majorité des professionnels de santé. De plus, le professionnel de santé est obligé de réserver des plages entières de son agenda pour les mettre exclusivement à disposition de la société de télé-secrétariat, de manière à éviter des conflits entre des rendez-vous pris par le professionnel de santé, lui-même, et les rendez-vous pris par la société de télé-secrétariat.

Par ailleurs, il est difficile, pour une société de télé-secrétariat, de définir une urgence de traitement associée à une pathologie d'un patient appelant. En principe, seul le professionnel de santé, lui-même, peut décider d'une urgence et réserver des plages horaires pour de telles urgences, ces plages horaires n'étant pas accessibles pour des patients ordinaires. Une telle situation nécessite à nouveau d'interrompre une consultation en cours du professionnel de santé pour qu'il décide de l'urgence du traitement d'un patient appelant.

La présente invention vient améliorer la situation.

Elle propose à cet effet un système de prise de rendez-vous par lecture/enregistrement de données en communiquant via un réseau. Ce système comporte :
- un serveur distant,
- une pluralité de postes clients et au moins un poste fournisseur comportant des moyens de communication respectifs avec le serveur via le réseau.

Le serveur du système au sens de l'invention comporte une mémoire agencée pour stocker :
- au moins un fichier partagé comprenant des données d'accès sécurisé et relatives à des états respectifs de plages horaires d'un calendrier,
- ainsi qu'une liste hiérarchisée de droits d'accès, chacun en correspondance d'un identifiant de poste client.

Le poste fournisseur est alors agencé pour lire et modifier ledit fichier partagé. En revanche, chaque poste client est agencé pour lire et modifier un nombre d'états de plages horaires qui est fonction du droit d'accès de ce poste client identifié dans ladite liste hiérarchisée.

Préférentiellement, dans l'application avantageuse de la présente invention à la gestion d'un agenda d'un professionnel de santé, le fichier partagé comporte donc des données de plages horaires d'un calendrier. Les modifications précitées du fichier partagé sont principalement relatives à des réservations de plages horaires disponibles dans le calendrier précité, pour une prise de rendez-vous. Le serveur comporte alors un module de mise à jour du fichier partagé, au moins en fonction d'une date et d'une heure en cours.

Bien entendu, d'autres mises à jour peuvent être prévues, telles que des plages horaires prédéterminées d'indisponibilité de l'utilisateur du poste fournisseur (par exemple, une période de congés du professionnel de santé).

Dans une réalisation particulièrement avantageuse, la pluralité de postes clients précitée comporte au moins :
- des postes clients ordinaires, et
- des postes clients prioritaires qui bénéficient de droits d'accès dans ladite liste hiérarchisée permettant aux postes prioritaires de modifier un plus grand nombre de données, par rapport aux postes ordinaires. Ainsi, dans l'application précitée de l'invention à la gestion d'un agenda d'un professionnel de santé, les clients prioritaires correspondent avantageusement à des patients dont la pathologie nécessite un traitement urgent.

Dans cette application, le poste fournisseur est avantageusement à disposition d'un professionnel de santé, tandis que les postes clients sont à disposition de patients de ce professionnel de santé. Le fichier partagé comporte des plages horaires disponibles du professionnel de santé. Avantageusement, le poste fournisseur comporte un module de saisie d'identifiants de patients, chaque identifiant étant en correspondance d'un degré d'urgence et/ou de priorité du patient, associé par exemple à une pathologie du patient qui porte cet identifiant.

En variante d'un degré d'urgence notamment associé à une pathologie, il peut s'agir d'un identifiant associé à un confrère du professionnel de santé qui envoie ses patients pour lesquels des plages horaires particulières sont réservées. Ainsi, de façon avantageuse, la liste stockée dans la mémoire du serveur peut être régulièrement mise à jour en fonction des identifiants saisis par le poste fournisseur à disposition du professionnel de santé.

Dans une réalisation avantageuse, le fichier partagé comporte des plages horaires indisponibles pour les patients, avec une indication d'une absence du professionnel de santé et/ou une consigne à suivre (par exemple une indication des heures d'ouverture du cabinet du professionnel de santé, ou encore une date de rentrée de congés).

Préférentiellement, les parties des données qui sont modifiables pour les postes client sont donc des plages horaires qui peuvent passer d'un état "*libres*" à un état "*occupées*", à partir d'une commande à distance, via le réseau de communication, d'un poste client.

Avantageusement, la présente invention n'est pas incompatible avec l'utilisation d'un poste de télé-secrétariat et, dans une réalisation avantageuse, le système au sens de l'invention comporte en outre un poste secrétariat équipé de moyens de communication avec le serveur via le réseau et qui bénéficie d'un droit d'accès dans la liste hiérarchisée lui permettant de modifier un plus grand nombre de données par rapport aux postes clients.

Selon une autre caractéristique avantageuse du système au sens de l'invention, pour gérer la cohérence des requêtes de modifications du fichier partagé, le serveur comporte en outre un module agencé pour inhiber une modification du fichier partagé pour un poste client, si un autre poste client est déjà en cours de lecture/enregistrement du fichier partagé.

Avantageusement, le poste fournisseur, au moins, comporte une mémoire capable de stocker une version du fichier partagé, ainsi que des moyens de mise à jour, actifs pendant une communication entre le poste fournisseur et le serveur, ces moyens de mise à jour modifiant la dernière version stockée dans la mémoire du poste fournisseur et en particulier remplaçant les rubriques dernièrement modifiées dans la version actuelle que fournit le serveur. Ainsi, le professionnel de santé, lorsque son poste fournisseur se connecte au serveur, peut consulter les rendez-vous qui ont été pris par les patients, à partir de leur poste client, d'une part, sans avoir nécessairement recours à un télé-secrétariat et, d'autre part, en ayant accès toujours à une version mise à jour sur son propre poste fournisseur.

Selon une autre caractéristique avantageuse, la mémoire du serveur stocke en outre une application logicielle pour contrôler chaque accès d'un poste au fichier partagé et pour sauvegarder le fichier partagé après modification d'une partie au moins des données de ce fichier. Le serveur gère ainsi le contrôle des droits d'accès et les plages horaires (ordinaires ou d'urgence) qui peuvent être allouées au poste client autorisé.

Bien entendu, le serveur du système au sens de la présente invention peut gérer une pluralité de fichiers partagés, pour une pluralité de postes fournisseurs, par exemple dans le cadre d'un service proposé à un groupe de professionnels de santé. Dans cette réalisation, le système comporte une pluralité de postes fournisseurs. La mémoire du serveur comporte ainsi une pluralité de fichiers partagés, associés chacun à un identifiant de poste fournisseur. Chaque fichier partagé est adressable dans la mémoire du serveur à partir de l'identifiant d'un poste fournisseur, cet identifiant étant par exemple un code attribué à un professionnel de santé, pour pouvoir bénéficier du service de gestion de son agenda.

Dans un mode de réalisation avantageux, le système de l'invention comporte :
- une interface serveur/client comprenant un premier module de gestion de droits d'accès capable d'accéder à une mémoire propre à stocker un identifiant pour chaque poste client en correspondance de droits d'accès audit fichier partagé,
- et une interface serveur/fournisseur comprenant un second module de gestion des droits d'accès capable d'accéder à une mémoire propre à stocker les droits d'accès associés à chaque identifiant d'un poste client,
lesdits premier et second modules de gestion des droits d'accès étant en outre aptes à communiquer ensemble pour une mise à jour symétrique des identifiants et des droits d'accès associés.

Dans une réalisation avantageuse, la mémoire à laquelle accède le premier module de gestion des droits d'accès est agencée pour mémoriser un identifiant unique en correspondance d'une pluralité de droits d'accès associés à un groupe d'utilisateurs, par exemple une famille.

D'autres avantages et caractéristiques de l'invention apparaîtront à la lecture de la description détaillée ci-après et à l'examen des dessins annexés, sur lesquels :
- la figure 1 représente schématiquement un système au sens de la présente invention, comportant un poste fournisseur et une pluralité de postes clients capables de communiquer avec un serveur, via un réseau de communication ;
- la figure 2 représente un système, dans un mode de réalisation particulier de la présente invention, comportant en outre un poste secrétariat capable de communiquer avec le serveur ;
- la figure 3 représente schématiquement une liste hiérarchisée au sens de la présente invention ;
- la figure 4 représente schématiquement un fichier partagé au sens de la présente invention ;
- la figure 5 représente plus en détail un poste fournisseur et un serveur, équipés de modules respectifs, pour l'échange de données dans le système au sens de l'invention ; et
- la figure 6 représente une architecture du système au sens de la présente invention, dans un mode de réalisation qui prévoit une gestion avantageuse des droits d'accès.

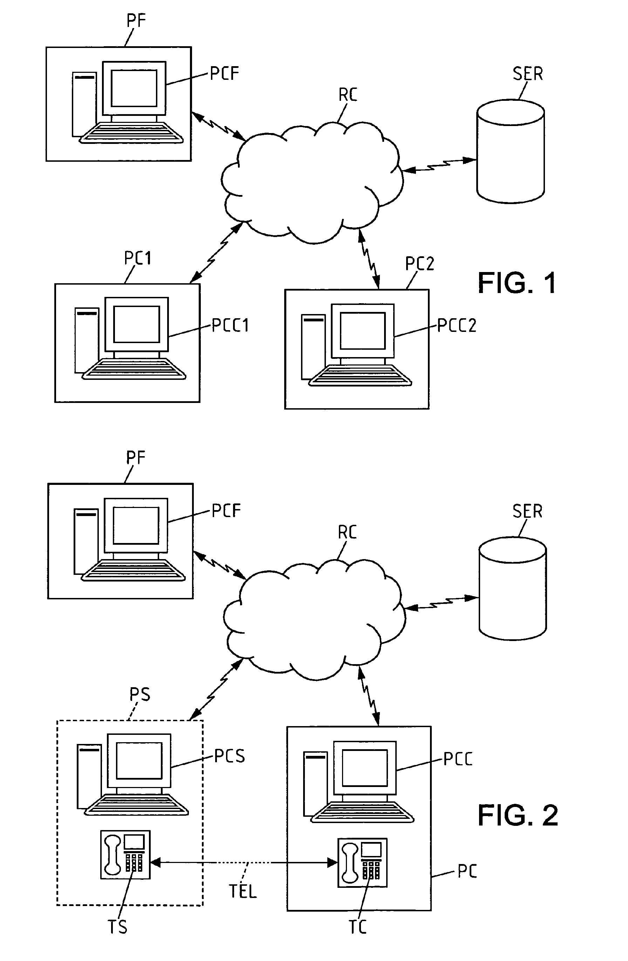

On se réfère tout d'abord à la figure 1 sur laquelle le système comporte un poste fournisseur PF, à disposition d'un professionnel de santé. Dans un mode de réalisation préféré, ce poste fournisseur comporte un micro-ordinateur PCF, tel qu'un micro-ordinateur de bureau, équipé d'un écran de visualisation, d'organes de saisie (clavier, souris, ou autres), d'une unité centrale munie d'un processeur, d'une mémoire vive, d'une mémoire morte, d'une carte graphique, audio, etc, et de moyens de communication (tels qu'un modem) avec un serveur SER, via un réseau de communication RC (par exemple le réseau Internet). Les postes clients PC1, PC2 sont, de la même manière, équipés de micro-ordinateurs PCC1 et PCC2 comportant des moyens de communication (modem dans l'exemple représenté) avec le serveur SER, via le réseau de communication RC.

On indique qu'en variante de micro-ordinateurs, les postes fournisseurs et les postes clients peuvent simplement être équipés de téléphones mobiles, ou encore d'assistants personnels PDA, capables de communiquer avec un serveur distant via un réseau de communication RC, de type GSM et/ou GPRS.

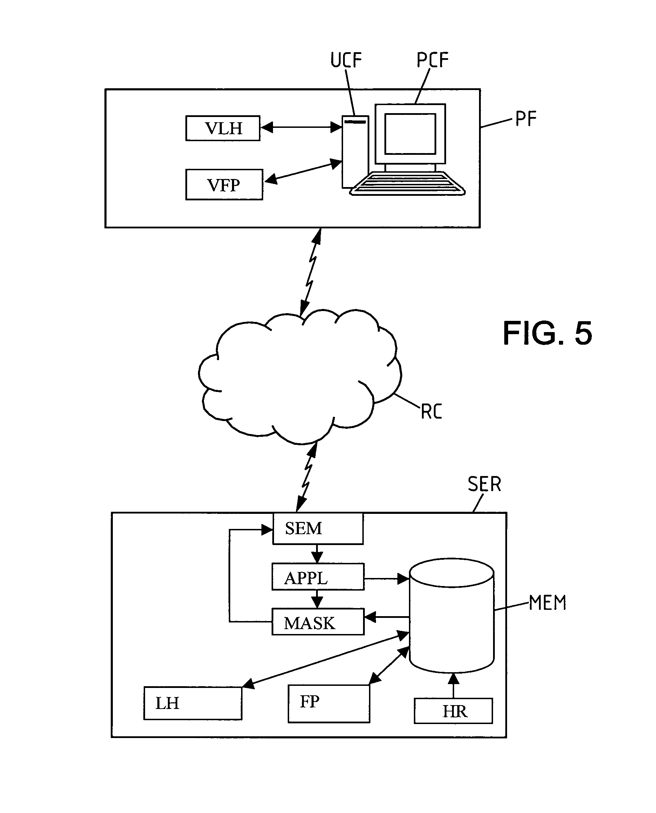

Toutefois, dans une réalisation avantageuse, le poste fournisseur PF comporte préférentiellement un micro-ordinateur PCF pour pouvoir consulter le fichier partagé, modifier l'état de plages horaires dans ce fichier partagé (les marquer par exemple comme étant occupées), modifier la liste hiérarchisée des patients, ou autres, comme on le verra en référence à la figure 5.

En complément ou en variante du système selon le mode de réalisation représenté sur la figure 1, il peut être prévu en outre un poste secrétariat PS capable de communiquer avec le serveur SER. En se référant à la figure 2, un poste client PC peut être équipé en outre d'un organe de communication TC avec le poste secrétariat PS. A cet effet, on prévoit par exemple un téléphone TC, à disposition d'un patient qui est client du professionnel de santé. Le poste secrétariat PS est équipé d'un téléphone TS pour recevoir des appels du patient, via le réseau commuté TEL. Dans ce mode de réalisation, le patient appelle le poste secrétariat et indique une plage horaire qu'il souhaiterait réserver pour un rendez-vous auprès du professionnel de santé. On indique qu'une personne secrétaire peut recevoir ces appels ou, en variante, que le poste secrétariat PS peut comporter un répondeur téléphonique dit *"intelligent"* capable d'orienter l'appelant dans les rubriques d'un menu prédéterminé, l'appelant appuyant sur les touches de son clavier en réponse aux rubriques du menu, ou encore en indiquant vocalement ses choix dans le menu. Dans ce mode de réalisation, le poste secrétariat PS comporte un micro-ordinateur PCS qui enregistre la requête de l'appelant (identité de l'appelant et plage horaire souhaitée) et la transmet au serveur SER.

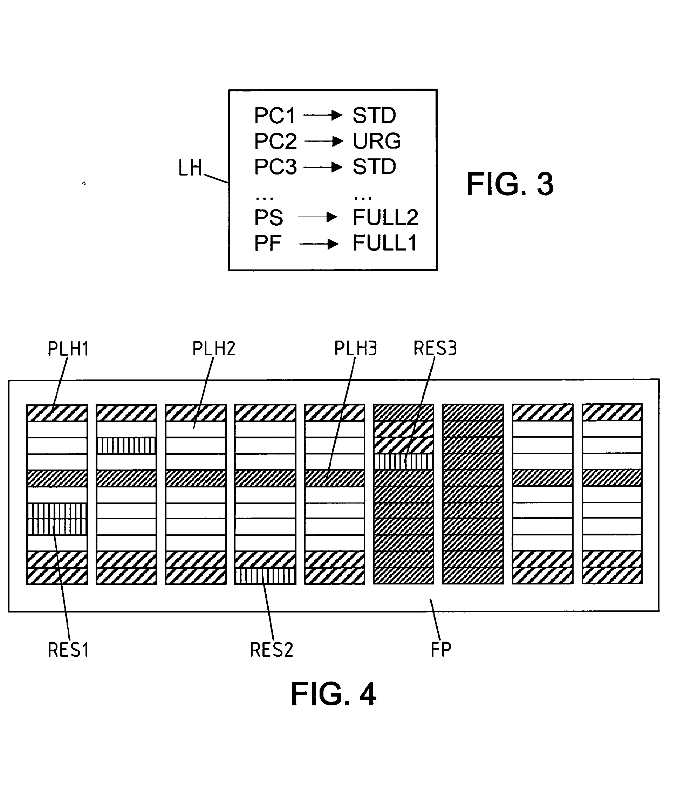

On se réfère maintenant à la figure 3 pour décrire la liste hiérarchisée LH qui est utilisée dans le système au sens de la présente invention.

On indique tout d'abord que, de manière générale, après la première consultation d'un patient auprès d'un professionnel de santé, le professionnel de santé détermine la pathologie du patient et associe, en fonction de cette pathologie, un degré d'urgence *"STD"* ou *"URG"* à ce patient. Lors de la première consultation, le professionnel de santé peut se connecter au serveur, par son micro-ordinateur PCF, pour demander au serveur un code d'accès (par exemple un code alphanumérique comportant un nombre prédéterminé de caractères) à affecter à ce patient. Sur la figure 3, le code d'accès qui permet d'identifier un tel patient est par exemple PC1, PC2, PC3. Le poste informatique PCF du professionnel de santé, comportant une unité centrale UCF (figure 5) stocke une liste hiérarchisée VLH dans laquelle le code PC1 du patient est mémorisé en correspondance d'un degré d'urgence "STD" associé à la pathologie de ce patient. Sur la figure 3, la référence "STD" correspond par exemple à un degré d'urgence standard qui ne nécessite pas une attention toute particulière. En revanche, la référence "*URG*" correspond à un degré d'urgence plus élevé et pour lequel le professionnel de santé s'efforce de réserver une plage horaire en dehors de ses horaires de travail habituels, comme on le verra en référence à la figure 4. On comprendra ainsi qu'à chaque code d'accès PC1, PC2, PC3 correspond un profil particulier (STD ou URG).

En se référant maintenant à la figure 5, pour chaque nouveau patient, le professionnel de santé instruit la liste VLH stockée dans la mémoire de son poste informatique PCF. Préférentiellement, à chaque modification de la liste VLH stockée dans le poste du professionnel de santé, les moyens de communication du poste PF établissent une communication avec le serveur SER et transmettent, sous forme de fichier informatique, la liste mise à jour VLH. Le serveur SER stocke cette liste dans sa mémoire MEM, sous la forme d'un fichier LH. Ainsi, la liste LH stockée auprès du serveur est régulièrement mise à jour, notamment à chaque demande d'attribution d'un code à un nouveau patient, cette demande étant formulée par le professionnel de santé. Une routine peut être installée sur le micro-ordinateur du professionnel de santé pour assurer, à chaque modification du fichier VLH (par exemple un changement de degré d'urgence pour un patient), le transfert du fichier VLH au serveur SER. Une routine peut être installée auprès du serveur SER pour écraser et remplacer une ancienne version de la liste LH par une nouvelle version VLH dès que le serveur reçoit cette nouvelle version VLH du poste fournisseur PF. En se référant à la figure 3, on remarquera que le poste fournisseur PF dispose d'un profil "*FULL1*" qui se distingue des autres profils "*FULL2*", "*URG*" et "*STD*", et pour lequel le serveur autorise à titre exclusif une mise à jour du fichier LH.

Dans une variante de ce mode de réalisation décrit ici à titre d'exemple, le professionnel de santé se connecte au serveur à l'aide de son poste PF pour consulter la version LH stockée dans le serveur SER et pour la modifier directement auprès du serveur.

Dans le mode de réalisation de la figure 1, un patient déjà identifié transmet, à partir de son poste PC1, son code d'accès (code alphanumérique par exemple) au serveur SER. Une application logicielle APPL (figure 5), stockée dans la mémoire du serveur, comporte des instructions pour assurer la mise en oeuvre des étapes suivantes :
- détection d'une requête de prise de rendez-vous, issue d'un poste PC,
- transmission d'une demande d'identification à ce poste PC, du type "*VEUILLEZ COMPOSER VOTRE CODE CLIENT AUPRES DE CE PROFESSIONNEL DE SANTE*",
- réception du code PC1, PC2 ou PC3 d'un patient, à partir du réseau RC,
- identification du code PC1, PC2 ou PC3 dans la liste LH,
- en cas d'échec, transmission d'un message du type "*VOUS N'ETES PAS IDENTIFIE EN TANT QUE PATIENT DE CE PROFESSIONNEL DE SANTE*" et fin de la routine,
- en cas de correspondance du code PC1, PC2 ou PC3 avec un code de la liste LH, lecture du profil (correspondant par exemple à un degré d'urgence associé).

Comme le montre la figure 5, la mémoire du serveur stocke en outre le fichier partagé FP. On se réfère à la figure 4 pour décrire le contenu de ce fichier partagé FP lorsqu'il est ouvert par une application logicielle de type tableur et présenté sur un écran d'une station de travail tel qu'un micro-ordinateur. On indique par ailleurs que la représentation de la liste hiérarchisée de la figure 3 peut être obtenue de manière similaire.

Le fichier partagé de la figure 4 se présente comme un agenda avec des plages horaires PLH2 disponibles pour tout patient (ordinaire ou urgent), des plages horaires PLH3 non ouvrées (jours de congés, heures de déjeuner, ou autres) représentées par des hachures obliques serrées, et des plages horaires PLH1 disponibles seulement pour des cas d'urgences (en début de matinée, en fin de soirée, week-ends, ou autres) représentées par des hachures obliques espacées. Les plages horaires déjà réservées RES1, RES2, RES3 sont représentées par des hachures verticales. La réservation RES1 a été effectuée par exemple par un patient de profil STD ou URG. La réservation RES2 (ou la réservation RES3) a été effectuée en revanche par un patient de profil exclusivement de type URG.

Bien entendu, on comprendra qu'il peut être attribué plus de deux types de codes d'accès aux patients, par exemple pour une gamme de degrés d'urgence (ou de profil) STD, URG1, URG2. Dans ce cas, le fichier partagé peut comporter plus de trois types de plages horaires (par exemple PLH2 pour les codes STD, URG1 et URG2 ; PLH1 en semaine (début et fin de journée) pour les codes URG1 et URG2 ; des plages du week-end par exemple, exclusivement pour le code URG2 ; et des plages PLH3 indisponibles pour tous les patients).

On indique que, de manière connue en soi, des cases particulières d'un tableau sous forme de fichier informatique peuvent être protégées en lecture ou en modification par un code d'accès ou *"mot de passe*".

Ainsi, l'application logicielle APPL précitée comporte alors des instructions supplémentaires pour assurer la mise en oeuvre des étapes suivantes :
- après lecture du code d'accès du patient, transmission du fichier partagé FP au terminal PCC du patient, de sorte que le patient visualise les plages horaires disponibles dans l'agenda du professionnel du santé et formule une requête de réservation par exemple en cliquant à l'aide d'une souris sur une plage horaire choisie,
- contrôle, avantageusement auprès du serveur, de la plage réservée en fonction du code d'accès du patient,
- en cas de compatibilité :
   - mémorisation de la plage horaire réservée en tant que modification du fichier FP et enregistrement de la nouvelle version du fichier FP dans la mémoire MEM : la plage horaire réservée dans le fichier FP passe de l'état *"libre"* à l'état *"occupé" ;*
   - transmission au poste PC d'un message du type *"RESERVATION FAITE POUR 10:30, LE 20*/*05*/*03*" *;*
   - transmission d'une nouvelle version VFP du fichier partagé au poste du professionnel de santé ; et
   - fin de la routine de réservation,
- en cas d'incompatibilité de la plage souhaitée et du code d'accès, transmission d'un message du type : "*CES HORAIRES SONT INDISPONIBLES*".

A ce titre, la présente invention vise aussi un produit programme d'ordinateur tel que l'application APPL et comportant des instructions pour la mise en oeuvre de toutes ou partie des étapes ci-avant.

Avantageusement, le serveur comporte des moyens de masquage de certaines parties du fichier partagé FP, lorsqu'il est édité (ces moyens de masquage étant connus en informatique des tableurs). Les moyens de masquage MASK (figure 5) peuvent se présenter sous la forme d'une routine stockée dans la mémoire MEM du serveur et qui permet, après lecture du profil STD, URG, etc dans la liste LH en correspondance d'un code d'accès identifié par l'application APPL, de masquer certaines parties du fichier partagé FP en fonction du profil lu. Ainsi, dans une version du fichier FP qu'envoie le serveur sous forme de tableau (préférentiellement sous forme d'agenda tel que représenté sur la figure 4), certaines plages horaires peuvent apparaître masquées (ou hachurées comme représenté sur la figure 4) ou non, selon le code d'accès du poste de communication avec le serveur. Par exemple, une première version est destinée aux patients et comporte simplement des plages horaires hachurées ou non. Une seconde version est transmise uniquement au professionnel de santé et comporte, à la place des hachures, les noms des patients qui ont effectué une réservation, ces noms étant bien entendu masqués dans la version qui est transmise aux patients. La version comportant les noms des patients est transmise au poste PF sous réserve de l'identification du profil FULL1 attribué au poste fournisseur PF comme indiqué ci-avant. Par ailleurs, la version envoyée à un patient de profil STD comporte plus de cases hachurées qu'une version envoyée à un patient de profil URG.

Ainsi, dans une réalisation préférée, la mémoire MEM du serveur stocke des moyens de masquage, en édition, du fichier partagé FP. L'édition du tableau correspondant (agenda de la figure 4) est plus ou moins masquée en fonction du type de profil STD, URG, FULL1 ou FULL2. Le profil FULL2 est celui du poste secrétariat PS, dans l'exemple représenté sur la figure 3 et dans le mode de réalisation où un tel poste supplémentaire est prévu.

Dans le mode de réalisation de la figure 2, le patient transmet, par exemple à partir de son téléphone TC, son identifiant au poste de secrétariat PS. Le micro-ordinateur PS du poste secrétariat transmet au serveur SER la requête du patient sous la forme de deux paramètres : l'identifiant du patient (ou son code d'accès) et la plage horaire souhaitée pour la réservation. C'est le poste secrétariat qui reçoit alors une version de l'agenda FP et qui effectue la réservation pour le patient appelant. Comme indiqué ci-avant, le poste secrétariat reçoit une version masquée du fichier FP qui est adaptée au code d'accès du patient. La réservation est faite parmi les plages horaires disponibles (cases non hachurées). Toutefois, en se référant à la figure 3, le poste secrétariat PS dispose de son propre code d'accès correspondant au profil "*FULL2*" qui permet notamment, comme le profil FULL1, de visualiser l'identité des patients qui ont déjà réservé une plage.

En outre, il est possible, à partir du poste PS, de modifier l'état de plages successives de *"libres"* à "*occupées*", même si elles incluent des plages de type PLH3 pour lesquelles aucune réservation ne peut normalement être faite. Cette situation correspond par exemple au cas où le professionnel de santé a donné l'ordre au poste secrétariat de réserver des journées complètes pour des congés ou des congrès, ou autres.

Toutefois, dans une réalisation préférée, le profil FULL2 ne permet pas une modification de la liste hiérarchisée LH stockée auprès du serveur, contrairement au profil FULL1. De même, le profil FULL1 du professionnel permet de déplacer un rendez-vous déjà pris, au profit d'une urgence, ce que, dans une mode de réalisation préféré, le code FULL2 du poste secrétariat ne permet pas. Le patient dont le rendez-vous est décalé est prévenu par un message que transmet le serveur au poste client correspondant ou au poste secrétariat pour prévenir le client par téléphone. Ainsi, le profil "*FULL2*" ne peut fournir au poste secrétariat que des droits d'accès plus restreints que ceux dont bénéficie le poste fournisseur à disposition du professionnel de santé, dans ce mode de réalisation décrit ici à titre d'exemple.

Par ailleurs, les profils FULL1 et FULL2 permettent une annulation de rendez-vous, si le professionnel de santé rencontre une difficulté pour exercer à une date donnée. Dans ce cas, le serveur envoie un message au poste client identifié dans la réservation pour prévenir le patient du désistement.

En se référant à nouveau à la figure 5, un module HR, de type horloge interne dans une station de travail, met à jour le fichier FP dans la mémoire du serveur SER pour actualiser l'heure et la date en cours. Les réservations ne peuvent voir lieu qu'entre une heure et une date en cours et, par exemple, trois mois après cette date en cours, de façon à minimiser la taille du fichier FP et la durée des échanges entre le serveur et les postes PC, PF, PS, via le réseau RC. Le serveur comporte en outre un module SEM dit "*sémaphore*" pour gérer la cohérence des requêtes issues de postes distants. En particulier, ce module SEM inhibe une modification du fichier partagé FP pour un poste client PC1, si un autre poste client PC2 est déjà en cours de lecture ou modification du fichier partagé.

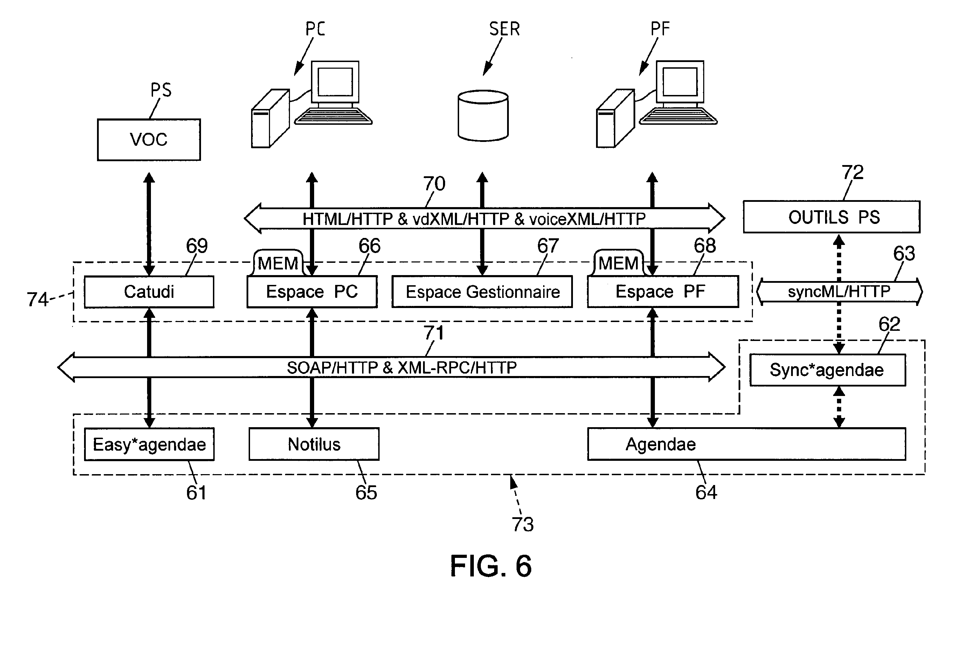

On se réfère maintenant à la figure 6 pour décrire un mode de réalisation du système comportant avantageusement un module de gestion des codes d'accès des patients. Plus précisément, la figure 6 représente une architecture préférentielle du système de prise de rendez-vous dans ce mode de réalisation.

Cette architecture est composée de deux couches.

Une première couche 73, dite "*back-end*", contient des applications logicielles de type *"moteurs"* qui sont préférentiellement réalisées par des développements JAVA sur un serveur d'application selon la norme J2EE. Préférentiellement, ce serveur est agencé pour communiquer avec un serveur de gestion de bases de données relationnelles.

Le moteur EASY*AGENDAE 61 est un module logiciel qui mémorise des certificats d'utilisateurs, associés aux codes d'accès et/ou identifiants de ces utilisateurs. Le moteur SYNC*AGENDAE 62 est un module logiciel qui dialogue avec les outils logiciels ("*outils métiers*") des professionnels de santé (poste PF de la figure 6) pour synchroniser les rendez-vous pris par un professionnel de santé sur son ordinateur PF, avec les rendez-vous qui sont pris par les patients (poste PC) sur une plate-forme de prise de rendez-vous en ligne du système au sens de la présente invention. La synchronisation avec ces outils logiciels utilise préférentiellement un medium "*middleware*" 63 selon la norme syncML et http comme couche de communication. Le moteur AGENDAE 64 est un module logiciel qui contient les agendas des professionnels de santé. Enfin, le moteur NOTILUS 65 est un module logiciel qui sert à la diffusion d'informations (préférentiellement en mode "*push*") principalement pour rappeler aux patients leurs rendez-vous. Il est avantageusement appelé par le moteur AGENDAE 64.

La deuxième couche 74 est un "*front-end*" qui contient :
- un espace patient 66 (établissant le dialogue avec les patients) ;
- un espace gestionnaire 67 (établissant un dialogue avec le serveur SER) ;
- un espace professionnel de santé 68 (établissant un dialogue avec les postes PF des médecins) ; et
- un espace "*catudi*" 69 assurant l'interprétation de commandes vocales des patients avec un poste PS sous la forme d'un serveur intelligent, à reconnaissance vocale.

Chacun des espaces 66 et 68 possède, en combinaison avec le serveur et les moteurs précités, une mémoire MEM pour mémoriser les codes d'accès respectivement des patients et des professionnels de santé. On retiendra en particulier que les espaces 66 et 68 peuvent accéder à une mémoire qui peut être physiquement prévue dans le serveur, ou en variante dans une autre entité du système.

Les espaces précités 66, 67, 68 sont des modules logiciels qui éditent des interfaces d'utilisateurs permettant une visualisation des informations fournies par les moteurs 61 et/ou 64. Ces espaces 66, 67 et 68 délivrent des flux XML (ou encore xHTML, WML, vdXML ou *"voice XML*"), référencés 70 sur la figure 6. Préférentiellement, ces espaces sont réalisés par des développements JAVA et XML sur un serveur de publications multiples s'appuyant sur un serveur d'application selon la norme J2EE. Le cas échéant, les espaces peuvent dialoguer en vocal via un interpréteur *"voice XML*". On indique que l'espace "*catudi*" 69 est un module logiciel qui édite les interfaces utilisateur vocal à partir des informations fournies par les moteurs 61 et/ou 64. Préférentiellement, l'espace "*catudi*" 69 est réalisé par des développements C, spécifiques sur un serveur vocal interactif PS.

Plus généralement, on prévoit donc deux couches logicielles : une couche basse comportant une brique de gestion des fonctionnalités et d'accès aux données (moteur 61 et/ou 64) et une couche haute comportant une brique de rendu des informations à l'utilisateur, sous forme d'interface homme/machine (les espaces 66, 67 et/ou 68). En tant qu'application webservice, ces deux couches communiquent entre elles par un bus logiciel 71, de type "*middleware*", par exemple selon la norme SOAP (permettant l'appel de procédures à distance, le formatage XML/textes d'appel et http comme couche de communication).

Dans ce mode de réalisation, toute communication de l'espace patient vers l'espace professionnel de santé est sécurisée par transmission d'un code d'accès.

Dans ce contexte général, en couche basse, un moteur EASY*AGENDAE met en oeuvre la prise de rendez-vous en ligne, au sens de la présente invention, avec, en couche haute, une interface homme/machine "*espace patient*" 66 qui gère les droits d'accès à des patients, pour ce qui concerne globalement l'accès des patients au service de réservation de plage horaire en ligne. Symétriquement, en couche basse, un moteur AGENDAE permet la mise à jour et la consultation, par les professionnels de santé, de leur agenda, avec, en couche haute, une interface homme/machine *"espace professionnel de santé*" 68 qui permet la visualisation/mise à jour de ces agendas par les professionnels de santé.

Préférentiellement, on prévoit en outre un module d'outil métier à disposition du professionnel de santé pour gérer l'agenda du professionnel de santé, référencé 72 sur la figure 6, qui accède à l'espace professionnel de santé pour lister les rendez-vous passés et à venir et, le cas échéant, pour formuler une annulation de rendez-vous.

On décrit maintenant le fonctionnement du système avec l'architecture représentée sur la figure 6 et permettant une gestion des droits d'accès des patients, dans le mode de réalisation précité.

L'attribution d'un code d'accès pour un patient s'effectue préférentiellement comme suit.

Le professionnel de santé dispose d'un espace de service (l'espace *"professionnel de santé*" référencé 68 sur la figure 6). Cet espace est accessible à partir des réseaux Internet ou mobiles et permet alors de gérer l'agenda du professionnel de santé et les droits d'accès à son agenda. Dans cet espace 68, le professionnel de santé peut demander la création d'un code d'accès pour toute personne à qui il souhaite ouvrir l'accès à la prise de rendez-vous automatique, en ligne.

Pour que le patient puisse utiliser ce code d'accès et prendre rendez-vous automatiquement, le patient possède un espace de service dit "*espace patient*", portant la référence 66 sur la figure 6. On indique toutefois que si le patient ne possède pas de code d'accès, le professionnel de santé peut lui en créer.

Il suffit ensuite au professionnel de santé de demander au patient l'identifiant de son espace patient pour transférer automatiquement le code d'accès dans cet espace patient. Le cas échéant, le professionnel de santé peut transférer dans cet espace un code d'accès pour cette personne, ou encore un autre code pour une autre personne, par exemple les enfants et l'époux/épouse de cette personne. Typiquement, une mère de famille peut être automatiquement autorisée à prendre des rendez-vous pour ses enfants.

L'utilisation du code d'accès s'effectue comme suit.

Un patient peut disposer d'un espace de service dit "*espace patient*" (référence 66 de la figure 6) qui est accessible par les réseaux téléphoniques fixes, mobiles, Internet, ou encore Minitel@. Dans cet espace 66, les codes d'accès sont stockés. La personne peut être soignée par plusieurs professionnels de santé. Chacun de ces professionnels de santé peut donner à la personne un code d'accès. Ainsi, cette personne pourra, à partir de son espace patient 66, prendre rendez-vous chez tous les professionnels de santé qui lui ont donné un code d'accès.

Ainsi, le patient ne doit mémoriser que les informations de sécurité (son identifiant et/ou authentifiant) pour entrer dans son espace patient. Une fois entrée, cette personne utilise de façon transparente les codes d'accès mémorisés par son espace patient pour prendre rendez-vous chez le professionnel de santé de son choix.

Pour ce faire, à la connexion d'un patient en ligne, l'espace patient balaie l'ensemble des codes d'accès de sa mémoire pour vérifier les codes d'accès. Il transmet ensuite ces codes à l'espace professionnel de santé 68 pour vérification. Comme indiqué ci-avant, chacun des espaces possède une mémoire pour mémoriser les codes d'accès respectivement des patients et des professionnels de santé.

Bien entendu, on comprendra que cette phase de vérification, bien qu'optionnelle, est avantageuse dans la mesure où l'espace patient n'utilise ici que des codes valides.

On décrit dans ce qui suit la prise de rendez-vous proprement dite, une fois que les codes d'accès ont été vérifiés.

Ainsi, lorsque la personne désire prendre rendez-vous, l'espace patient balaie l'ensemble des codes d'accès dans sa mémoire. En fonction de ces codes, l'espace patient présente la liste des professionnels de santé pour lesquels il existe un code d'accès correspondant. Lorsque la personne a choisi le professionnel de santé, l'espace patient liste les codes d'accès pour présenter l'ensemble des patients qui ont un droit de prise de rendez-vous, le cas échéant avec une hiérarchie dans ces choix, selon l'identité du patient. Bien entendu, ces étapes sont décrites ici à titre d'exemple, dans un ordre de succession qui admet des variantes.

L'espace patient interroge ensuite l'espace professionnel de santé pour accéder à l'agenda du professionnel de santé qui a été choisi. A cet effet, l'espace patient 66 transmet à l'espace professionnel de santé 68 le code d'accès qui correspond au professionnel de santé et au patient sélectionné.

L'espace professionnel de santé 68 vérifie alors que le droit d'accès est valide. Si tel est le cas, l'espace professionnel de santé 68 répond aux demandes et en particulier aux demandes de plages horaires libres provenant de l'espace patient 66.

Lorsque la personne a choisi de prendre rendez-vous, l'espace patient transmet la demande à l'espace professionnel de santé 68, lequel peut alors communiquer une réservation de plage horaire dans l'agenda virtuel du professionnel de santé, en indiquant l'identifiant de la personne qui réserve cette plage horaire.

La liste des rendez-vous est mise à jour comme suit.

L'espace patient balaie l'ensemble des codes d'accès mémorisés et transmet l'ensemble de ces codes à l'espace professionnel de santé.

L'espace professionnel de santé vérifie la validité des codes transmis.

A partir de cette liste de codes, l'espace professionnel de santé recherche l'ensemble des rendez-vous des personnes concernées capables de prendre des rendez-vous avec des professionnels de santé concernés.

La procédure d'annulation d'un rendez-vous s'effectue préférentiellement comme suit.

Après avoir listé les rendez-vous, si le patient souhaite annuler un rendez-vous futur, l'espace patient transmet la demande d'annulation à l'espace professionnel de santé. L'espace professionnel de santé vérifie la validité du code et annule le rendez-vous du patient dans l'agenda du professionnel de santé sélectionné.

Une procédure de révocation d'un code d'accès s'effectue comme suit.

La personne qui possède un espace patient peut supprimer un code d'accès qui ne lui sert plus. Par exemple, à la suite d'un déménagement ou autre, le patient peut supprimer le code d'accès de son ancien médecin généraliste qu'il ne consulte plus.

Symétriquement, le professionnel de santé peut effacer ou modifier un code d'accès dans son espace professionnel de santé. Ce code étant symétrique, toute tentative d'accès de l'espace patient pour prendre rendez-vous, lister, ou encore annuler un rendez-vous, serait alors rejetée. En bref, l'espace patient 66 permet de gérer des codes d'accès grâce à :
- une mémorisation des codes d'accès ;
- un enregistrement des codes d'accès lorsqu'ils sont transmis automatiquement par l'espace professionnel de santé ; et
- une gestion des codes d'accès qui permet d'ajouter, lister ou supprimer les codes d'accès.

Avantageusement, ce mode de réalisation qui prévoit un espace patient et un espace professionnel de santé permet de gérer, sans difficulté excessive, l'accès contrôlé aux plages horaires d'un agenda d'un professionnel de santé. Ce mode de réalisation particulièrement avantageux permet une gestion automatique des codes d'accès et d'éviter ainsi à un utilisateur de composer son code (généralement une longue chaîne de caractères), ce qui est toujours une source d'erreurs, de frappe notamment. En outre, une gestion de droit d'accès classique devrait prévoir un code d'accès pour chaque utilisateur d'une famille. Dans le mode de réalisation ci avant, une seule personne peut transmettre simplement son identifiant, qui sera reconnu auprès de l'espace patient et, simplement en fonction de cet identifiant, la personne pourra prendre rendez-vous pour un enfant ou pour le conjoint/conjointe, selon un autre avantage que procure ce mode de réalisation qui prévoit un module de gestion des droits d'accès.

Bien entendu, la présente invention ne se limite pas à la forme de réalisation décrite ci-avant à titre d'exemple mais elle s'étend à d'autres variantes.

Ainsi, on comprendra en particulier qu'elle s'applique à tout type d'activités autres que celle des professionnels de santé et, de façon générale, à des réservations, à distance, de plages horaires de différents types sous réserve de droits d'accès associés à ces différents types.

Par ailleurs, la durée des plages horaires ci-avant PLH1 à PLH3 peut aussi être plus ou moins étendue selon le code d'accès dont dispose le poste client. Ainsi, dans l'exemple d'une activité d'un professionnel de santé, il peut être prévu un profil supplémentaire dans la liste hiérarchisée correspondant à des consultations plus longues que des auscultations ordinaires. Les patients dont le code d'accès correspond à ce profil dans la liste bénéficieront alors d'une plage horaire réservée qui s'étend par exemple sur deux plages horaires allouées normalement à des patients ordinaires.

On a décrit ci-avant la gestion de l'agenda d'un seul professionnel de santé mais l'invention s'applique à la gestion de plusieurs agendas. A cet effet, le système selon l'invention comporte une pluralité de postes fournisseurs et la mémoire du serveur stocke une pluralité de fichiers partagés, respectifs et associés chacun à un identifiant de poste fournisseur. Ainsi, chaque fichier est adressable dans la mémoire du serveur à partir de l'identifiant d'un poste fournisseur.

## Revendications

1. Système de prise de rendez-vous par lecture/enregistrement de données en communiquant via un réseau, le système comportant :
- un serveur distant (SER),
- une pluralité de postes clients (PC1-PC3) et au moins un poste fournisseur (PF) comportant des moyens de communication respectifs avec le serveur via le réseau,
**caractérisé en ce que** le serveur comporte une mémoire (MEM) agencée pour stocker :
- au moins un fichier partagé (FP) comprenant des données d'accès sécurisé et relatives à des états respectifs de plages horaires d'un calendrier,
- ainsi qu'une liste hiérarchisée (LH) de droits d'accès, chacun en correspondance d'un identifiant de poste client,
et **en ce que** le poste fournisseur est agencé pour lire et modifier ledit fichier partagé, tandis que chaque poste client est agencé pour lire et modifier un nombre d'états de plages horaires qui est fonction du droit d'accès de ce poste client identifié dans ladite liste hiérarchisée.

2. Système selon la revendication 1, **caractérisé en ce que** les modifications dudit fichier comportent des réservations de plages horaires disponibles dudit calendrier, pour une prise de rendez-vous,
et **en ce que** le serveur comporte un module (HR) de mise à jour du fichier partagé au moins en fonction d'une date en cours.

3. Système selon l'une des revendications 1 et 2, **caractérisé en ce qu'**il comporte en outre un poste secrétariat (PS) comportant des moyens de communication avec le serveur via le réseau et bénéficiant d'un droit d'accès dans ladite liste hiérarchisée autorisant le poste secrétariat à modifier un plus grand nombre de données par rapport aux postes clients.

4. Système selon l'une des revendications 1 à 3, **caractérisé en ce que** ladite pluralité de postes clients comporte au moins :
- des postes clients ordinaires (STD), et
- des postes clients prioritaires (URG) bénéficiant de droits d'accès dans ladite liste hiérarchisée autorisant les postes prioritaires à modifier un plus grand nombre d'états de plages horaires par rapport aux postes ordinaires.

5. Système selon la revendication 4, prise en combinaison avec la revendication 2, **caractérisé en ce que** le poste fournisseur est à disposition d'un professionnel de santé tandis que les postes clients sont à disposition de patients du professionnel de santé,
**en ce que** ledit fichier (FP) partagé comporte des plages horaires disponibles du professionnel de santé,
**en ce que** le poste fournisseur comporte un module de saisie d'identifiants de patients en correspondance chacun d'un degré d'urgence et/ou de priorité du patient portant cet identifiant,
et **en ce que** ladite liste (LH) stockée dans la mémoire du serveur est mise à jour en fonction desdits identifiants (VLH) saisis par le poste fournisseur.

6. Système selon la revendication 5, **caractérisé en ce que** ladite partie des données modifiables comporte au moins un état de plages horaires "*libres*" ou "*occupées*" du professionnel de santé.

7. Système selon la revendication 6, **caractérisé en ce que** le fichier partagé comporte des plages horaires indisponibles pour les patients, avec une indication d'une absence du professionnel de santé et/ou une consigne à suivre.

8. Système selon l'une des revendications précédentes, **caractérisé en ce que** le serveur comporte en outre un module (SEM) agencé pour inhiber une modification du fichier partagé pour un second poste client, si un premier poste client est déjà en cours de lecture/enregistrement du fichier partagé.

9. Système selon l'une des revendications précédentes, **caractérisé en ce que** le poste fournisseur au moins comporte une mémoire agencée pour stocker une version (VFP) dudit fichier partagé, ainsi que des moyens de mise à jour de ladite version à partir du fichier (FP) stocké dans la mémoire du serveur, actifs lors d'une communication entre le poste fournisseur et le serveur.

10. Système selon l'une des revendications précédentes, **caractérisé en ce que** la mémoire du serveur stocke en outre une application logicielle (APPL) pour contrôler l'accès d'un poste au fichier partagé et pour sauvegarder ledit fichier après modification d'une partie au moins desdites données.

11. Système selon l'une des revendications précédentes, **caractérisé en ce qu'**il comporte une pluralité de postes fournisseurs, **en ce que** la mémoire du serveur comporte une pluralité de fichiers partagés, associés chacun à un identifiant de poste fournisseur, et **en ce que** chaque fichier est adressable dans la mémoire du serveur à partir de l'identifiant d'un poste fournisseur.

12. Système selon l'une des revendications précédentes, **caractérisé en ce que** le serveur comporte des moyens de masquage (MASK), en mode lecture, d'une partie au moins desdites données du fichier partagé, en fonction dudit droit d'accès du poste client.

13. Système selon l'une des revendications précédentes, **caractérisé en ce qu'**il comporte :
- un réseau téléphonique,
- un répondeur intelligent connecté au réseau téléphonique et comportant des moyens pour obtenir les codes d'accès des postes clients, et
- une connexion au serveur pour enregistrer une modification partielle du fichier partagé pour lesdits postes clients.

14. Système selon l'une des revendications précédentes, **caractérisé en ce qu'**il comporte :
- une interface serveur/client comprenant un premier module de gestion de droits d'accès (66) capable d'accéder à une mémoire (MEM) propre à stocker un identifiant pour chaque poste client (PC) en correspondance de droits d'accès audit fichier partagé,
- et une interface serveur/fournisseur comprenant un second module de gestion des droits d'accès (68) capable d'accéder à une mémoire (MEM) propre à stocker les droits d'accès associés à chaque identifiant d'un poste client (PC),
et **en ce que** lesdits premier et second modules de gestion des droits d'accès (66,68) sont aptes à communiquer ensemble pour une mise à jour symétrique des identifiants et des droits d'accès associés.

15. Système selon la revendication 14, **caractérisé en ce que** la mémoire (MEM) à laquelle accède le premier module de gestion des droits d'accès (66) est agencée pour mémoriser un identifiant unique en correspondance d'une pluralité de droits d'accès associés à un groupe d'utilisateurs.
